# EUROPEAN PATENT SPECIFICATION

(11) **EP 3 511 594 B1**
(45) Date of publication and mention of the grant of the patent: **04.12.2024**
(21) Application number: 19151371.2
(22) Date of filing: 11.01.2019
(51) Int. Cl.: F16H 39/14, F02C 7/32, F16C 19/26, F16C 33/58

(54) **FIXED BLOCK SHAFT FOR INTEGRATED DRIVE GENERATOR**
FESTE BLOCKWELLE FÜR EINEN INTEGRIERTEN ANTRIEBSGENERATOR
ARBRE DE BLOC FIXE POUR GÉNÉRATEUR À ENTRAÎNEMENT INTÉGRÉ

(30) Priority: 15.01.2018 US 201815871449
(43) Date of publication of application: 17.07.2019
(73) Proprietor: Hamilton Sundstrand Corporation, Charlotte, NC 28217-4578 (US)
(72) Inventor: HOCHSTETLER, Derek R., Rockford, IL 61101 (US); MARTIN, Ted A., Winnebago, IL 61088 (US); JOHNSON, Duane C., Beloit, 53511 (US); LEMMERS, Glenn C. Jr., Loves Park, IL 61111 (US)
(74) Representative: Dehns

(56) References cited:
- US-A- 4 990 807
- US-B1- 9 435 378

## Description

### BACKGROUND

This application relates to a method of replacing a fixed block shaft in a hydraulic unit of an integrated drive generator.

Integrated drive generators are known and often utilized in aircraft. As known, a gas turbine engine on the aircraft provides a drive input into a generator input shaft. The generator typically includes a disconnect shaft that can transmit the input into a gear differential. The gear differential selectively drives a main generator to provide electric power for various uses on the aircraft.

It is desirable that the generated power be of a desired constant frequency. However, the speed from the input shaft will vary during operation of the gas turbine engine. This would result in variable frequency.

Integrated drive generators are provided with speed trimming hydraulic units. Gears associated with the differential and, in particular, a ring gear portion, provide rotation from the differential back into the trimming unit. A carrier also rotates another portion of the trimming unit. The trimming unit is operable to result in the output speed of the differential being effectively constant, such that electric power of a desirable frequency is generated.

The generator is mounted between two housing portions and a seal plate is mounted between the two housing portions.

In addition, various accessory systems, such as various pumps, are driven by the ring gear of the differential through an accessory drive gear.

A fixed block shaft, which is part of the speed trimming hydraulic unit, faces design challenges.

Us 4,990,807 relates to an integrated drive generator.

### SUMMARY

A fixed block shaft for use in an integrated drive generator has a body extending from a first end to a second end. A disc extends radially outwardly of a shaft portion. The shaft portion extends to the second end. The disc extends radially outwardly from the shaft adjacent the first end with a boss extending to the first end from the disc. The boss defines an inner peripheral surface and the inner peripheral surface has a bearing race. The bearing race extends from the first end to a bearing race end. An inner diameter of the bearing race defines a first distance. An inner diameter of the bearing race is defined as a first distance and the bearing race extends along a central axis for a second distance. A ratio of the first distance to the second distance is between 4.30 and 4.50.

The invention provides a method of replacing a fixed block shaft from an integrated drive generator in accordance with claim 1.

These and other features may be best understood from the following drawings and specification.

### BRIEF DESCRIPTION OF THE DRAWINGS

Figure 1 schematically shows an integrated drive generator.
Figure 2 schematically shows hydraulic units in the integrated drive generator.
Figure 3 shows the components of a hydraulic unit.
Figure 4A shows a fixed block shaft.
Figure 4B is a cross-section through the shaft.
Figure 4C shows a gear tooth profile.
Figure 4D shows a second spline tooth profile.

### DETAILED DESCRIPTION

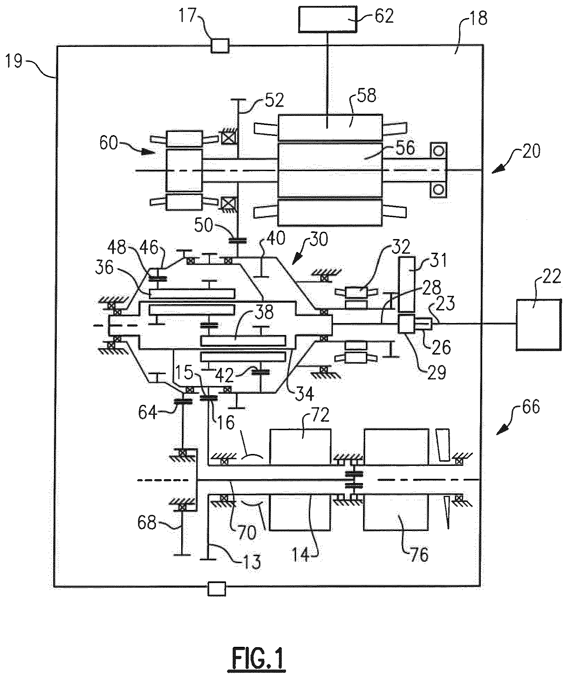

Figure 1 shows an integrated drive generator 20. As shown, housing portions 18 and 19 surround the integrated drive generator and a seal plate 17 sits between the housing portions 18 and 19.

A gas turbine engine 22 may drive an input shaft 23 which selectively drives a disconnect assembly 26. The disconnect assembly 26, in turn, drives a carrier shaft 28, which drives a carrier in a gear differential 30.

As the carrier shaft 28 rotates, planet gears 36 and 38 are caused to rotate. Gears 38 have a gear interface 42 with a first ring gear portion 40. Gears 36 have a gear interface 48 with a second ring gear portion 46.

Ring gear portion 40 has a gear interface 50 with a main generator drive gear 52. When drive gear 52 is driven to rotate, it rotates a rotor 56 associated with a stator 58 of the main generator as well as an exciter rotor 60. Electric power is generated for a use 62, as known.

It is desirable that the frequency of the generated electric power be at a desired frequency. This requires the input speed to gear 52 to be relatively constant and at the desired speed. As such, the speed of the input shaft 23 is added to the speed of the speed trimmer 66 to result in a constant input speed to gear 52.

A gear 15 that is part of the carrier has a gear interface 16 with a gear 13 driving a shaft 14 also within the speed trimmer.

As known, the speed trimmer 66 includes a variable unit 72 and a fixed unit 76. The units 72 and 76 may each be provided with a plurality of pistons and a swash plate arrangement. If the input speed of the gear 13 is too high, the speed of the gear 52 will also be too high, and hence, the speed trimmer 66 acts to lower the speed of the trim gear 46 which will drop the speed of gear 52. On the other hand, if the input speed is too low, the speed trimmer will increase the trim gear speed and he speed seen by gear 52 will increase.

In essence, the variable unit 72 receives an input through gear 13 that is proportional to the speed of the input shaft 23. The variable unit 72 also receives a control input from a control monitoring the speed of the generator rotor 56. The position of the swash plate in the variable unit 72 is changed to in turn change the speed and direction of the fixed unit 76. The fixed unit 76 can change the speed, and direction of rotation of the shaft 70, and this then provides control back through the trim ring gear 46 to change the speed reaching the generator. In this manner, the speed trimmer 66 results in the frequency generated by the generator being closer to constant, and at the desired frequency.

A permanent magnet generator 32 rotates with the ring gear 40.

An accessory drive shaft 29 rotates with the ring gear 40 and drives a plurality of accessory gears 31.

The operation of the integrated drive generator 20 is generally as known in the art. A worker of ordinary skill would recognize that the desired frequency and speed at use 62 would dictate a number of design functions.

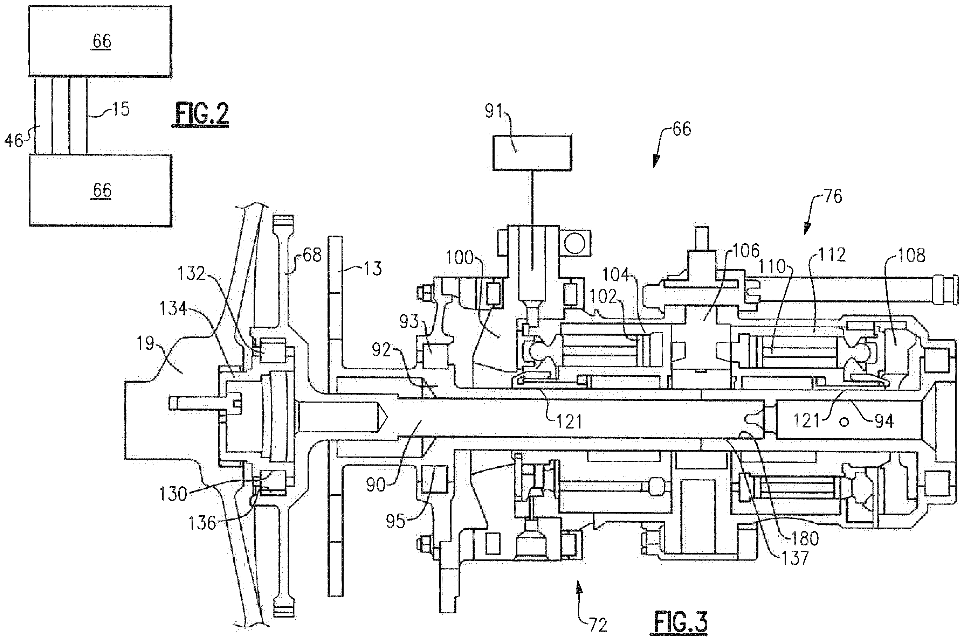

Figure 2 shows that there are a pair of hydraulic or speed trimming units 66 associated with a single ring gear 46 and a single carrier 15.

Figure 3 shows details of the hydraulic unit 66. A speed into the gear 13 will be proportional to the speed from the input shaft 23. The gear 13 rotates with a shaft 92. The shaft 92 is supported on bearing 93. The shaft, through splined teeth 121, drives a cylinder block 104 to rotate.

The shaft 90 is called a fixed block shaft, although it rotates. The shaft 90 is supported on a bearing 132 received on a bearing race 130 on the fixed shaft 90. In addition, an inner race 134 for the bearing 132 is mounted on a housing 19. The inner race 134 includes a race surface 136.

A control 91 changes the position of a swash plate 100 based upon the input speed seen at the generator. As the cylinder block 104 rotates, pistons 102 within the cylinder block cam off a surface of the swash plate 100. As the position of the swash plate 100 is changed by control 91, the amount of hydraulic fluid driven by the pistons 102, through a port plate 106, and against piston 110 in a cylinder block 112 changes. As the pistons 110 move, they cam off a surface of fixed swash plate 108. This results in a control of a speed and direction of rotation of cylinder block 112. Cylinder block 112 has a spline connection at 121 to a shaft 94. Thus, the hydraulic unit 66 results in a desired speed and direction of rotation of the shaft 94, ultimately based upon the input speed seen at the generator. The shaft 94 drives the shaft 90 through spline teeth at 137 to in turn drive the gear 68. The gear 68 interacts with the trim ring gear 46 such that the ultimate speed leaving the differential 30 to the gear 52 is controlled to achieve a constant desired speed at the generator.

The cylinder blocks 104 and 112 are effectively identical. In addition, there are similar cylinder blocks 104/112 in both of the hydraulic units 66.

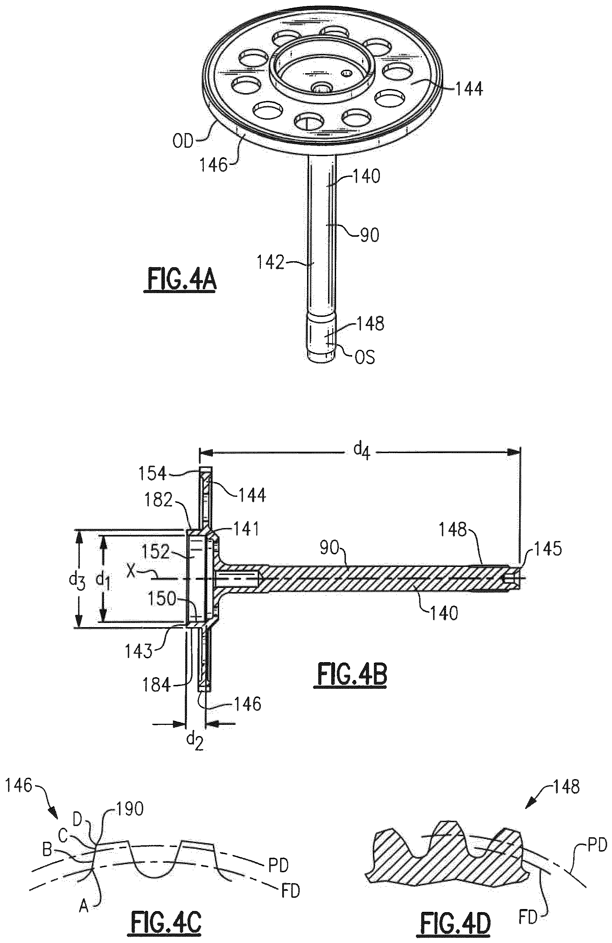

Figure 4A shows details of the fixed block shaft 90. A body 140 of the shaft 90 includes a shaft portion 142 and extends to a disc 144, extending radially outwardly of the shaft 142. In addition, gear teeth 146 are formed at an outer diameter OD of the disc 144 and provide the gear interface shown at 64 with the ring gear 46. Splines 148 are formed at an outer shaft OS and provide the connection at 137 to spline teeth on the shaft 94.

As can be appreciated, the shaft 90 is supported within a bore 180 of the shaft 94 and the shaft 94 will have spline teeth at its inner periphery for providing its half of the engagement at 137.

Figure 4B is a cross-section through the shaft 90. The body 140 is shown as extending from a first end 143 to a second end 145. A recess 152 is shown extending to end 143 and includes a bearing race surface 150. The bearing race 150 extends from end 143 to a bearing race end 141. A diameter across the bearing race 150 is defined as d₁. In embodiments, d₁ was 4.999 centimeters (1.968 inches). A boss 182 extends forwardly of the disc 144 to the end 143 and defines the recess 152.

A distance d₂ is defined from the length of the bearing race along a central axis X, between end 143 and bearing race end 141. In embodiments, d₂ was 1.13 centimeters (.448 inch).

An outer surface 184 of the boss 182 defines an outer diameter d₃. In an embodiment, d₃ was 5.641 centimeters (2.221 inches).

A distance d₄ is defined between a forward end 154 of the disc 144 and the end 145. In an embodiment d₄ was 17.823 centimeters (7.018 inches). It should be understood that this and all dimensions in the application carry a tolerance of +/- .025 centimeters (0.010 inch).

In embodiments, a ratio of d₁ to d₃ was between 0.80 and 0.95. A ratio of d₁ to d₂ was between 4.30 and 4.50. A ratio of d₃ to d₄ was between 0.25 and 0.40.

Figure 4C shows a gear tooth profile for the teeth 146. As known, gear teeth can be defined by the roll angles at points A, B, C, and D. It is known in the art how to define the locations and defining the location of these points forms no portion of this disclosure. However, the roll angles themselves are unique. In an embodiment, angle A is at a maximum form diameter FD. Angle B is 20% away from point A and toward an outer tip of the gear teeth and outer tip 190 of the gear teeth. The roll angle at C is spaced 80% percent from point A and the roll angle at D is at the point 190.

In an embodiment, the pitch diameter was 12.700 centimeters (5.00 inches). The maximum form diameter was 12.421 centimeters (4.89 inches). The roll angle at A was 16.7 degrees and in embodiments between 16.0 and 17.5 degrees. The roll angle at B was 18.2 degrees and in embodiments between 17.4 and 18.9 degrees. The roll angle at C was 22.4 degrees and in embodiments between 21.7 and 23.2 degrees. The roll angle at D was 23.8 degrees and in embodiments between 23.1 and 24.6 degrees.

Figure 4D shows the splines 148. Here, the pitch diameter was .550 inch (1.397 centimeters). The maximum form diameter was .525 inch (1.334 centimeters.) In embodiments, there are 22 spline teeth 148 and 100 of the gear teeth 146.

A method of replacing a fixed block shaft includes the steps of removing an existing fixed block shaft from an integrated drive generator having an input shaft connected to a differential, which is connected to a generator, and also to a hydraulic unit. The hydraulic unit includes a variable swash plate and a fixed swash plate, each being associated with a set of pistons. A fixed shaft is associated with the fixed shaft plate, and driven to rotate by a cylinder block associated with the fixed swash plate. The fixed shaft includes a spline connection to drive the existing fixed block shaft, which has gear teeth engaged to a ring gear in the differential. The existing fixed block shaft is replaced with a replacement fixed block shaft having a body extending from a first end to a second end and a disc extending radially outwardly of a shaft portion. The shaft portion extends to the second end and the disc extends radially outwardly from the shaft adjacent the first end with a boss extending to the first end from the disc. The boss defines an inner peripheral surface, which is a bearing race. The bearing race extends from the first end to a bearing race end. An inner diameter of the bearing race defines a first distance. An inner diameter of the bearing race is defined as a first distance and the bearing race extending along a central axis for a second distance. A ratio of the first distance to the second distance is between 4.30 and 4.50.

Although an embodiment of this invention has been disclosed, a worker of ordinary skill in this art would recognize that certain modifications would come within the scope of the following claim.

## Claims

1. A method of replacing a fixed block shaft in an integrated drive generator comprising the steps of:
a) removing an existing fixed block shaft (90) from an integrated drive generator having an input shaft (23) connected to a differential (30), said differential connected to a generator (56, 58), and said differential also being connected to a hydraulic unit (66), said hydraulic unit including a variable swash plate (100) and a fixed swash plate, and each of said swash plates being associated with a set of pistons, and a fixed shaft associated with said fixed shaft plate, and driven to rotate by a cylinder block associated with said fixed swash plate, and said fixed shaft including a spline connection to drive the existing fixed block shaft, said existing fixed block shaft having gear teeth engaged to a ring gear in said differential; and
b) replacing the existing fixed block shaft with a replacement fixed block shaft (90) having a body (140) extending from a first end (143) to a second end (145) and a disc (144) extending radially outwardly of a shaft portion (142), said shaft portion extending to said second end and said disc extending radially outwardly from said shaft adjacent said first end with a boss (182) extending to said first end from said disc, said boss defining an inner peripheral surface, and said inner peripheral surface being a bearing race, (150), and said bearing race extending from said first end to a bearing race end, and an inner diameter of said bearing race defining a first distance, an inner diameter of said bearing race being defined as a first distance and said bearing race extending along a central axis for a second distance, and a ratio of said first distance to said second distance being between 4.30 and 4.50;
wherein an outer diameter of said boss (182) is defined as a third distance, and a ratio of said first distance to said third distance being between 0.80 and 0.95;
wherein a fourth distance defined between an end of said disc facing said first end (143) and said second end (145) and a ratio of said second distance to said fourth distance being between 0.050 and 0.075;
wherein said gear teeth have a gear tooth profile defined by roll angles at points A, B, C, and D, wherein the roll angle at point A is at a maximum form diameter, the roll angle at point B is 20 percent away from point A and toward point D, the roll angle at point C is 80 percent away from point A and toward point D, and the roll angle at point D is at the outer diameter of the gear tooth, wherein the roll angle at A is between 16.0 and 17.5 degrees, the roll angle at B is between 17.4 and 18.9 degrees, the roll angle at C is between 21.7 and 23.2 degrees, and the roll angle at D is between 23.1 and 24.6 degrees;
wherein the first distance is 4.999 +/- 0.025 cm, the second distance is 1.13 +/- 0.025 cm, the third distance is 5.641 +/- 0.025 cm, and the fourth distance is 17.823 +/- 0.025 cm;
wherein there are one hundred of said gear teeth and twenty-two spline teeth.

## Patentansprüche

1. Verfahren zum Ersetzen einer festen Blockwelle in einem integrierten Antriebsgenerator, umfassend die folgenden Schritte:
a) Entfernen einer vorhandenen festen Blockwelle (90) aus einem integrierten Antriebsgenerator, der eine Eingangswelle (23), die mit einem Differential (30) verbunden ist, aufweist, wobei das Differential mit einem Generator (56, 58) verbunden ist, und wobei das Differential auch mit einer Hydraulikeinheit (66) verbunden ist, wobei die Hydraulikeinheit eine variable Taumelscheibe (100) und eine feste Taumelscheibe umfasst, und wobei jede der Taumelscheiben mit einem Kolbensatz verbunden ist, und wobei eine feste Welle mit der festen Wellenplatte verbunden ist und von einem mit der festen Taumelscheibe verbundenen Zylinderblock in Drehung versetzt wird, und die feste Welle eine Keilverbindung zum Antrieb der vorhandenen feststehenden Blockwelle beinhaltet, wobei die vorhandene feste Blockwelle eine Verzahnung aufweist, die mit einem Zahnkranz in dem Differential in Eingriff steht; und
b) Ersetzen der vorhandenen festen Blockwelle durch eine feste Ersatzblockwelle (90), die einen Körper (140), der sich von einem ersten Ende (143) zu einem zweiten Ende (145) erstreckt, und eine Scheibe (144), die sich von einem Wellenabschnitt (142) radial nach außen erstreckt, aufweist, wobei sich der Wellenabschnitt zum zweiten Ende erstreckt und die Scheibe sich von der Welle in der Nähe des ersten Endes radial nach außen erstreckt, wobei sich ein Vorsprung (182) von der Scheibe zum ersten Ende erstreckt, wobei der Vorsprung eine Innenumfangsfläche bildet, und wobei die Innenumfangsfläche ein Lagerlaufring (150) ist, und wobei der Lagerlaufring sich von dem ersten Ende zu einem Lagerlaufringende erstreckt, und wobei ein Innendurchmesser des Lagerlaufrings einen ersten Abstand definiert, wobei ein Innendurchmesser des Lagerlaufrings als ein erster Abstand definiert ist und der Lagerlaufring sich entlang einer Mittelachse über einen zweiten Abstand erstreckt und ein Verhältnis des ersten Abstands zum zweiten Abstand zwischen 4,30 und 4,50 liegt;
wobei ein Außendurchmesser des Vorsprungs (182) als ein dritter Abstand definiert ist und ein Verhältnis des ersten Abstands zu dem dritten Abstand zwischen 0,80 und 0,95 liegt;
wobei ein vierter Abstand zwischen einem Ende der Scheibe, das dem ersten Ende (143) zugewandt ist, und dem zweiten Ende (145) definiert ist und ein Verhältnis zwischen dem zweiten Abstand und dem vierten Abstand zwischen 0,050 und 0,075 liegt;
wobei die Verzahnung ein Verzahnungsprofil aufweist, das durch die Abrollwinkel an den Punkten A, B, C und D definiert ist, wobei der Abrollwinkel an Punkt A bei einem maximalen Formdurchmesser liegt, der Abrollwinkel an Punkt B 20 Prozent von Punkt A weg und zu Punkt D hin beträgt, der Abrollwinkel an Punkt C 80 Prozent von Punkt A weg und zu Punkt D hin beträgt und der Abrollwinkel an Punkt D am Außendurchmesser des Zahnes liegt, wobei der Abrollwinkel bei A zwischen 16,0 und 17,5 Grad, der Abrollwinkel bei B zwischen 17,4 und 18,9 Grad, der Abrollwinkel bei C zwischen 21,7 und 23,2 Grad und der Abrollwinkel bei D zwischen 23,1 und 24,6 Grad liegt;
wobei der erste Abstand 4,999 +/- 0,025 cm beträgt, der zweite Abstand 1,13 +/- 0,025 cm beträgt, der dritte Abstand 5,641 +/-0,025 cm beträgt und der vierte Abstand 17,823 +/- 0,025 cm beträgt;
wobei einhundert Verzahnungszähne und zweiundzwanzig Keilwellenzähne vorhanden sind.

## Revendications

1. Procédé de remplacement d'un arbre de bloc fixe dans un générateur à entraînement intégré comprenant les étapes suivantes :
a) le retrait d'un arbre de bloc fixe (90) existant d'un générateur à entraînement intégré présentant un arbre d'entrée (23) relié à un différentiel (30), ledit différentiel étant relié à un générateur (56, 58), et ledit différentiel étant également relié à une unité hydraulique (66), ladite unité hydraulique comportant un plateau oscillant variable (100) et un plateau oscillant fixe, et chacun desdits plateaux oscillants étant associé à un ensemble de pistons, et un arbre fixe associé audit plateau d'arbre fixe, et entraîné pour tourner par un bloc-cylindres associé audit plateau oscillant fixe, et ledit arbre fixe comportant une connexion cannelée pour entraîner l'arbre de bloc fixe existant, ledit arbre de bloc fixe existant présentant des dents d'engrenage en prise avec une couronne dentée dans ledit différentiel ; et
b) le remplacement de l'arbre de bloc fixe existant par un arbre de bloc fixe de remplacement (90) présentant un corps (140) s'étendant depuis une première extrémité (143) vers une seconde extrémité (145) et un disque (144) s'étendant radialement vers l'extérieur d'une partie d'arbre (142), ladite partie d'arbre s'étendant jusqu'à ladite seconde extrémité et ledit disque s'étendant radialement vers l'extérieur depuis ledit arbre adjacent à ladite première extrémité avec un bossage (182) s'étendant jusqu'à ladite première extrémité à partir dudit disque, ledit bossage définissant une surface périphérique interne, et ladite surface périphérique intérieure étant une bague de roulement (150), et ladite bague de roulement s'étendant depuis ladite première extrémité vers une extrémité de bague de roulement, et un diamètre intérieur de ladite bague de roulement définissant une première distance, un diamètre intérieur de ladite bague de roulement étant défini comme une première distance et ladite bague de roulement s'étendant le long d'un axe central sur une deuxième distance, et un rapport de ladite première distance sur ladite deuxième distance étant compris entre 4,30 et 4,50 ;
dans lequel un diamètre extérieur dudit bossage (182) est défini comme une troisième distance, et un rapport de ladite première distance sur ladite troisième distance étant compris entre 0,80 et 0,95 ;
dans lequel une quatrième distance est définie entre une extrémité dudit disque faisant face à ladite première extrémité (143) et ladite seconde extrémité (145) et un rapport de ladite deuxième distance à ladite quatrième distance étant compris entre 0,050 et 0,075 ;
dans lequel lesdites dents d'engrenage ont un profil de dent d'engrenage défini par des angles de roulis aux points A, B, C et D, dans lequel l'angle de roulis au point A est à un diamètre de forme maximum, l'angle de roulis au point B est à 20 pour cent du point A et vers le point D, l'angle de roulis au point C est à 80 pour cent du point A et vers le point D, et l'angle de roulis au point D est au diamètre extérieur de la dent d'engrenage, dans lequel l'angle de roulis en A est compris entre 16,0 et 17,5 degrés, l'angle de roulis en B est compris entre 17,4 et 18,9 degrés, l'angle de roulis en C est compris entre 21,7 et 23,2 degrés et l'angle de roulis en D est compris entre 23,1 et 24,6 degrés ;
dans lequel la première distance est de 4,999 +/- 0,025 cm, la deuxième distance est de 1,13 +/- 0,025 cm, la troisième distance est de 5,641 +/- 0,025 cm et la quatrième distance est de 17,823 +/- 0,025 cm ;
dans lequel il y a cent desdites dents d'engrenage et vingt-deux dents cannelées.
